# EUROPEAN PATENT SPECIFICATION

(11) **EP 2 769 751 B1**
(45) Date of publication and mention of the grant of the patent: **31.08.2016**
(21) Application number: 13460012.1
(22) Date of filing: 26.02.2013
(51) Int. Cl.: A62C 2/06, A62C 3/16, F16L 5/04

(54) **Clamping ring of fire protection collar**
Klemmring einer Brandschutzmanschette
Bague de serrage de collier coupe-feu

(43) Date of publication of application: 27.08.2014
(73) Proprietor: Mercor S.A., 80-408 Gdansk (PL)
(72) Inventor: Bartczak, Dariusz, 83-010 Rotmanka (PL)
(74) Representative: Czabajski, Jacek

(56) References cited:
- EP-A2- 0 982 522
- DE-U1-202010 002 839
- GB-A- 2 388 174
- GB-A- 2 457 152

## Description

The present invention relates to a clamping ring of fire protection collar mounted on a service duct penetration through partitions in the building engineering. The fire protection collar constitutes a fire protection of penetrations in walls of buildings. Penetrations serve for passing power, ventilation or electric lines and other services through partitions; they are usually accommodated in ducts, especially in plastic tubes of diverse diameters.

Services of media of any kind as well as ventilation systems penetrate partition walls of buildings in ducts, usually made of plastic. Ducts of that kind make at the same time paths of possible propagation of fire hazard from a room where fire developed to the neighboring rooms. For elimination of that hazard fire protection collars mounted on the duct are usually used. The collars contains an outer clamping ring and an inner layer of nonflammable thermally expandable material, which begins to increase its volume to the inside when the rated operating temperature is exceeded. That causes closing of the pipe inside and blocking of the flow of fire gases. In order to achieve that goal said collar contains an inner layer of nonflammable thermally expandable material and an outer clamping ring of considerable strength, usually made of steel sheet. Owing to such design of the collar expansion of the thermally expandable material is directed towards the inside of the duct, which results in closing of the duct.

A number of fire protection collar designs are known. A known solution for a collar of that kind is presented in a Polish patent specification No. PL 192279. According to that known solution the expandable fire protection device contains a flexible jacket accommodating an expandable fire protection insert. The jacket has perforations in the form of slots placed next to each other and positioned transversally with respect to the length of the jacket. These lateral perforations present areas of weakening separated by narrow linking bridges. Certain number of said perforations together with ribs between them is distributed with such spacing that it is possible to bend the jacket manually, in order to match the diameter of the duct on which the collar is mounted.

Another known solution is presented in a Polish patent specification No. PL 194823. That known solution concerns a continuous tape from which a fire protection collar is formed. According to that solution the continuous tape contains a flexible sheath accommodating a flexible fire protection expandable material. The flexible sheath according to that known solution has elements, protruding from its edge surfaces, which keep the fire protection material in place and is divided along its length in sections selected depending on the diameter of the duct on which the collar is mounted. According to that known solution the metal sheath of the fire protection material has the form of a continuous tape. The tape has in predetermined places lines of transversal weakening. The lines of transversal weakening have the form of perforation lines made transversally with respect to the tape length. Another embodiment of fire protection collar is shown in EP 0982522 and DE 20 2010002839U1.

Another known solution of a fire protection collar is presented in a British patent specification No. GB 2233725. According to that known solution a fire barrier is made in such a way: formed on a duct is a jacket made of net and accommodating a layer of material which expands due to a temperature rise. The outer jacket is provided with side protrusions for fastening the collar as a whole to the building partition penetrated by the conduit to be protected.

Still another known solution is presented in an American patent specification No. US 5103609. According to that known solution the collar contains a swelling material, which expands quickly and uniformly, whereas the outer jacket has protruding laps in the form of clamps. One end of the collar jacket has the protruding clamps, the other end has corresponding openings. By inserting the clamps into the openings one can stably join the jacket ends to form a clamping ring. In another solution, known from GB 2457152 fire collar comprises temperature expands seal. From GB 2388174 is known solution where the jacket comprises weakening zones in rows along a lines perpendicular to the longitudinal peripheral edge of the collar.

Another known solution of a fire protection collar is presented in an American patent specification No. US 4951442. That solution presents a design of a fire protection collar for use on pipe penetrations. Assembling of said collar includes stages of wrapping strips of thermally expandable material around the pipe, followed by wrapping the whole in a clamping ring having the form of a jacket. In this known solution strips of expandable material are a separate component and the external jacket is a separate component. The whole is assembled on the service pipe by preliminarily joining the clamping ring ends together and clamping them with the aid of a known pipe clamp. In another embodiment according to that known solution semicircular halves of the clamping ring have the internal layer of a thermally expandable material provided as a standard.

Working out a new design of a fire protection collar clamping ring, of unchanged flexibility but characterized by higher mechanical resistance to tensile forces is the objective of the invention. This objective is solved in the clamping ring design presented in Claim No. 1 and in subsequent claims.

According to the invention the clamping ring of fire protection collar for a service duct penetration through a building partition is a jacket in the form of an outer belt. The clamping ring contains feet for fastening the jacket to a building partition at the place of duct penetration. The jacket also contains clamps for stabilizing a layer of expandable material between the jacket and the duct. The fastening feet and stabilizing clamps are perpendicular to the jacket plane. The jacket, in the form of an outer belt, contains weakening zones. The jacket weakening zones have the form of systems of oblong opening in this jacket, these oblong openings having been placed along lines perpendicular to the longitudinal edges of the jacket.

The clamping ring of the collar according to the invention is characterized in that the longitudinal symmetry axes of each of the oblong openings in the clamping ring jacket deflect from those lines perpendicular to the longitudinal edges of the jacket.

In a favorable solution according to the invention the longitudinal symmetry axes of all oblong openings are deflected in one direction from the lines perpendicular to the longitudinal edges of that jacket

It has been foreseen according to the invention that feet for fastening the jacket to a building partition and clamps for stabilizing the layer of expandable material may be mounted on the jacket edges, favorably between the rows of openings.

Openings in the feet for fastening the clamping ring jacket to a partition making a building wall have favorably the oblong form.

The longer axes of symmetry of oblong openings in the feet for fastening the jacket to a building partition may be, in a favorable version of the clamping ring according to the invention, directed perpendicularly to the surface of that clamping ring jacket.

It has been foreseen in a further favorable solution of the clamping ring according to the invention that zones of connection of fastening feet and stabilizing clamps with the edges of the jacket surface may comprise weakened border spots in the form of cutouts in the jacket longitudinal edges.

The clamping ring according to the invention comprises an outer jacket of new design. Known zones of weakening run along lines perpendicular to the longitudinal edges of the jacket and have usually the form of indentations or oblong openings in the jacket material, running also along lines perpendicular to the longitudinal edges of the clamping ring jacket. A zone of weakening has been proposed according to the invention in the form of a row of oblong openings, whose longitudinal symmetry axes are oblique with respect to the longitudinal edges of the clamping ring jacket. Thus, the longitudinal symmetry axes of these openings, in the clamping ring laid over a layer of expandable material around a service duct penetration, are arranged along helices. As walls of these openings run along helices rather than along lines perpendicular to the jacket edges, the tensile strength of the clamping ring in the radial direction is increased. A substantial tensile force appears as a result of expansion of the material swelling between the clamping ring and the external surface of the service duct. That occurs as a result of temperature increase within said service duct, for instance due to fire. The material, kept on the outside by a clamping ring according to the invention, expands towards the duct inside. Such a situation takes place in the case of exporting fire hazard via a service duct from one room to another in a building. The tensile strength of the clamping ring in the radial direction is the essential parameter that ensures directing expansion of the expandable material towards the inside of said duct. A final closure of the duct and cutting off the way of fire hazard export occur. Thus, the increase of said parameter in the clamping ring solution according to the invention decides on the significant progress in the effectiveness of the collar as a fire protection device.

The object of the invention has been presented in an embodiment shown in the following drawings, where the respective figures illustrate:
Fig. 1 - uncoiled collar clamping ring.
Fig. 2 - coiled collar clamping ring.
Fig. 3 - reel of expandable material.
Fig. 4 - area of joining clamping ring ends after coiling.
Fig. 5 - complete collar in the form of a clamping ring with the inner reel of expandable material, viewed along the axis.
Fig. 6 - collar according to fig. 5, perspective view.
Fig. 7 - collar according to fig. 6 mounted on a service duct penetration through a wall.

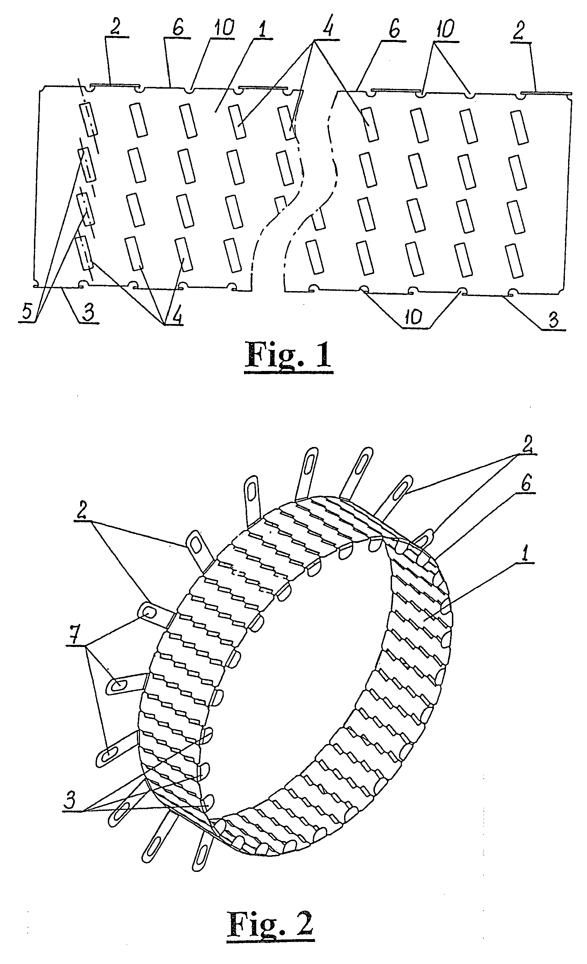

As shown in fig. 1 and fig. 2 the clamping ring of fire protection collar for mounting on a service duct penetration through a building partition is a jacket 1 in the form of a belt. Jacket 1 in the uncoiled form is shown in fig. 1, whereas fig. 2 is a perspective view of the coiled clamping ring. The clamping ring comprises feet 2 for fastening this jacket 1 to a building partition at the service duct penetration. Jacket 1 comprises also clamps 3 which stabilize the layer of expandable material between this jacket 1 and the external surface of the duct. Fastening feet 2 and stabilizing clamps 3 are in this embodiment perpendicular to the plane of this jacket 1. In other embodiments especially fastening feet may be positioned at a different angle with respect to jacket 1 of the clamping ring. Jacket 1 in the form of a metal sheet belt contains zones of weakening.

Enclosed figures fig. 1, fig. 2, fig. 4 and fig. 6 show said zones of weakening. The zones of weakening of jacket 1 have the form of oblong openings 4 in this jacket 1. That is shown in figures fig. 1, fig. 2, fig. 4 and fig. 6. Longitudinal symmetry axes 5 of each of oblong openings 4 in clamping ring jacket 1 are deflected from these lines perpendicular to edge 6 of jacket 1. That is distinctly shown in fig. 1.

In the embodiment shown longitudinal symmetry axes 5 of all oblong openings 4 are deflected from lines perpendicular to edge 6 of clamping ring jacket 1 in the same direction. That does not exclude deflecting these longitudinal symmetry axes of the respective openings 4 in other directions.

Feet 2 which fasten jacket 1 to a building partition and clamps 3 which stabilize the layer of expandable material are mounted on continuous sections of jacket 1 edge 6, in zones lying between rows of openings 4. That is shown in figures fig. 1, fig. 2 and fig. 6.

Openings 7 in feet 2 which fasten clamping ring jacket 1 to a partition in the form of a building wall are in the embodiment presented in the enclosed figures oblong shaped. This is shown in figures fig. 2, fig. 5 and fig. 6. That gives some freedom of movement when mounting the collar to a partition.

Longer symmetry axes 8 of these oblong openings 7 in feet 2 for fastening jacket 1 to a building partition are directed in this embodiment perpendicularly to the surface of clamping ring jacket 1. That does not exclude different directions of these longitudinal symmetry axes 8 in other embodiments of the clamping ring according to the invention.

Fig. 1 shows especially well zones of joining fastening feet 2 and stabilizing clamps 3 to jacket 1. These zones of joining fastening feet 2 and stabilizing clamps 3 to jacket 1 comprise weakened border spots in the form of cutouts 10 in the longitudinal edges of the jacket.

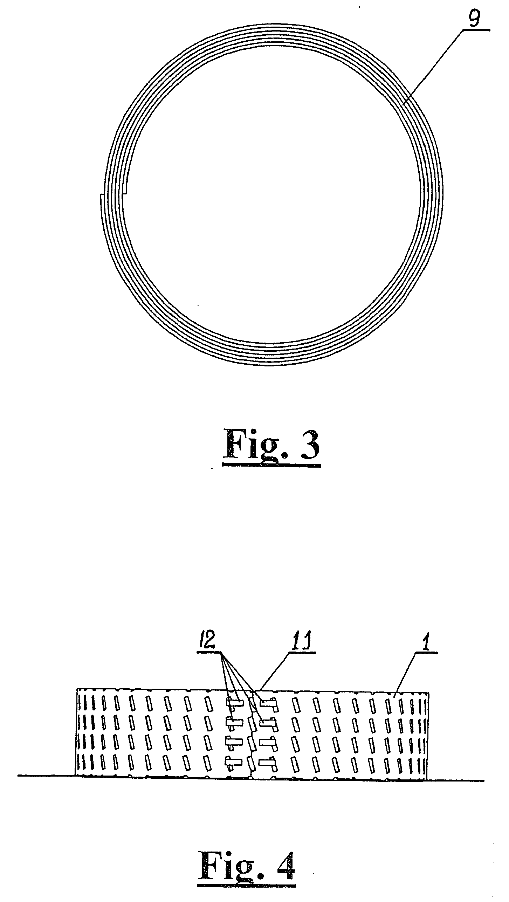

Fig. 3 shows a reel of thermally expandable material 9. The required thickness of such layer 9 is obtained by wrapping an appropriate number of material layers around the service duct, so that the expected clearance between the external surface of the duct and internal surface of jacket 1 of the clamping ring according to the invention is filled up. Thus, it is possible to use the same clamping ring for a certain range of duct diameters.

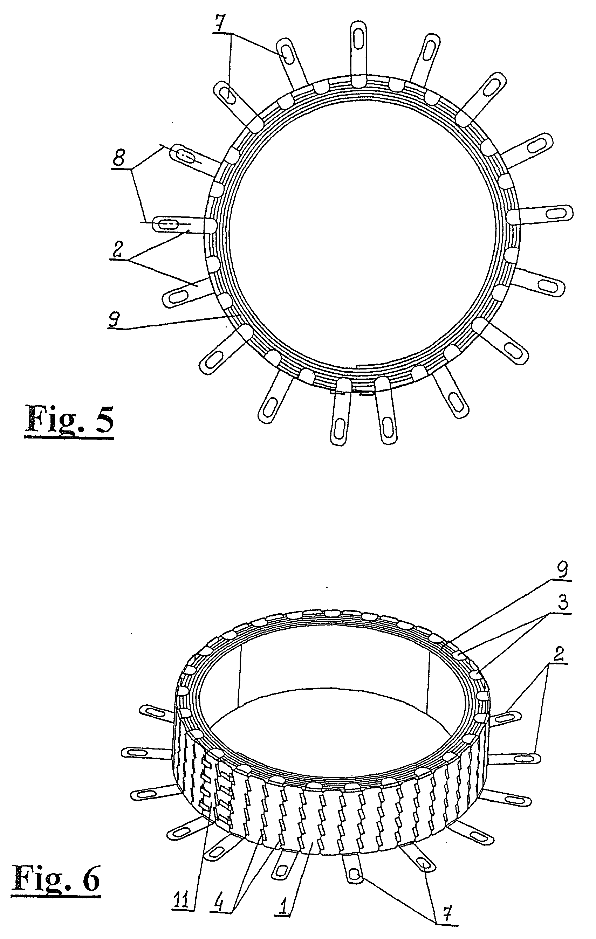

The enclosed figures fig. 5 and fig. 6 show a complete collar in the form of a clamping ring according to the invention together with thermally expandable material layer 9. The entire collar in this form is placed on a duct and fastened, using openings 7, to a building partition penetrated by that service duct. The jacket, delivered to the workplace in the uncoiled form as shown in fig. 1 is next put around the duct, wrapped in a layer of thermally expandable material 9, and its ends in the selected joining zone 11 are joined together using a connecting member with claws 12. Claws 12 are inserted into oblong openings 4 in joining zone 11 and bent to fix the connection. Use of another kind of connection of jacket 1 ends in other embodiments of the clamping ring according to the invention is not excluded.

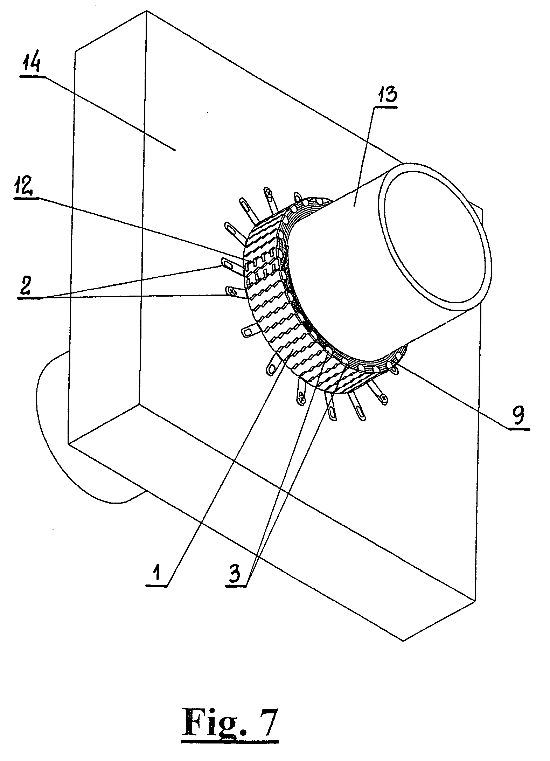

Fig. 7 shows the collar together with the clamping ring in the working position, mounted on duct 13 of service duct penetration through wall 14. The duct contains an internal layer of material 9 expanding due to a temperature rise. Material layer 9 is wrapped around service duct 13 penetrating wall 14. Jacket 1 constituting the clamping ring according to the invention is put around material layer 9. As shown in that figure jacket 1 is fastened to wall 14 with the aid of fastening feet 2. Jacket 1 holds with clamps 3 the thermally expandable material layer 9.

### List of denotations in the figures

- 1.: Jacket.
- 2.: Fastening foot.
- 3.: Stabilizing clamp.
- 4.: Oblong opening.
- 5.: Symmetry axis.
- 6.: Longitudinal edge of the jacket.
- 7.: Opening in the fastening foot.
- 8.: Symmetry axis.
- 9.: Layer of expandable material.
- 10.: Cutout.
- 11.: Joining zone.
- 12.: Joining claw.
- 13.: Duct penetration.
- 14.: Wall.

## Claims

1. Clamping ring of fire protection collar, constituting a jacket in the form of an outer belt, which comprises feet fastening this jacket to a partition in a building at the place of service duct penetration, and comprises clamps that stabilize a layer of expandable material between this jacket and the duct surface, where the jacket contains weakening zones, and zones of clamping ring jacket weakening, constitute systems of oblong openings, the openings having been arranged along lines perpendicular to longitudinal edges of this jacket, **characterized in that** longitudinal symmetry axes (5) of each of oblong openings (4) are deflected from these lines perpendicular to longitudinal edges (6) of this jacket (1).

2. Clamping ring according to Claim 1, **characterized in that** longitudinal symmetry axes (5) of all oblong openings (4) are deflected in one direction.

3. Clamping ring according to Claim 1 or 2, **characterized in that** feet (2) fastening jacket (1) and clamps (3) stabilizing expandable material layer (9) are mounted on longitudinal edges (6) of jacket (1) in zones between rows of openings (4).

4. Clamping ring according to Claim 1 or 3, **characterized in that** openings (7) in feet (2) fastening jacket (1) are oblong shaped.

5. Clamping ring according to Claim 4, **characterized in that** longer symmetry axes (8) of openings (7) in fastening feet (2) of jacket (1) are directed perpendicularly to the surface of that jacket (1).

6. Clamping ring according to one of Claims 1 - 5, **characterized in that** zones of joining fastening feet (2) and stabilizing clamps (3) with clamping ring jacket (1), comprise weakened border spots in the form of cutouts (10) in longitudinal edges (6) of this jacket (1).

## Patentansprüche

1. Klemmring einer Brandschutzmanschette, umfassend einen Mantel in der Form eines Außenbandes, welches Befestigungsfüße aufweist, mit denen der Mantel an eine Trennwand eines Bauobjektes an einem Durchgang einer Installationsleitung zu befestigen ist, wobei der Klemmring mit Füßchen versehen ist, welche eine Schicht eines Quellstoffes zwischen dem Mantel und einer Leitungsoberfläche stabilisieren, wobei der Mantel Abschwächungszonen aufweist, wobei die Abschwächungszonen des Klemmringmantels Anordnungen von Längsöffnungen bilden, wobei die Längsöffnungen entlang der zu den Längskanten des Mantels senkrecht verlaufenden Linien angeordnet sind, **dadurch gekennzeichnet, dass** die Längssymmetrieachsen (5) aller Längsöffnungen (4) zu den besagten senkrecht gegenüber den Längskanten (6) des Mantels (1) verlaufenden Linien schräg angeordnet sind.

2. Klemmring nach Anspruch 1, **dadurch gekennzeichnet, dass** die Längssymmetrieachsen (5) sämtlicher Längsöffnungen (4) in eine Richtung schräg verlaufen.

3. Klemmring nach Anspruch 1 oder 2, **dadurch gekennzeichnet, dass** die Befestigungsfüße (2) des Mantels (1) sowie die die Schicht (9) des Quellstoffes stabilisierenden Füßchen (3) in den Bereichen zwischen den Reihen von Öffnungen (4) an den Kanten (6) des Mantels (1) angeordnet sind.

4. Klemmring nach Anspruch 1 oder 3, **dadurch gekennzeichnet, dass** die Öffnungen (7) an den Befestigungsfüßen (2) des Mantels (1) Längsöffnungen sind.

5. Klemmring nach Anspruch 4, **dadurch gekennzeichnet, dass** die Längssymmetrieachsen (8) der Öffnungen (7) an den Befestigungsfüßen (2) des Mantels (1) senkrecht zur Oberfläche des Mantels (1) gerichtet sind.

6. Klemmring nach einem der Ansprüche 1 bis 5, **dadurch gekennzeichnet, dass** die Verbindungsbereiche der Befestigungsfüße (2) und der stabilisierenden Füßchen (3) mit dem Mantel (1) des Klemmrings an den Längskanten (6) des Mantels (1) angeordnete Abschwächungsbereiche in der Form von Ausnehmungen (10) aufweisen.

## Revendications

1. Bague de serrage de collier coupe-feu, constituant une chemise sous forme d'une ceinture externe, contenant les pattes de fixation de cette chemise au cloison d'un bâtiment, au passage d'un conduit d'installation et contenant les pattes de stabilisation de la couche de la matière plastique intumescente entre la chemise et la surface du conduit incluant les zones d'affaiblissement, où les zones d'affaiblissement de la chemise de la bague de serrage contiennent les systèmes des orifices longitudinaux; ces orifices longitudinaux sont placés le long des lignes perpendiculaires aux bords longitudinaux de cette chemise, **caractérisée en ce que** les axes de symétrie longitudinale (5) de chacun de ces orifices longitudinaux (4) sont écartés par rapport à ces lignes perpendiculaires des bords longitudinaux (6) de cette chemise (1).

2. Bague de serrage selon la revendication 1, **caractérisée en ce que** les axes de symétrie longitudinale (5) de tous les orifices lingitudinaux (4) sont écartés dans le même sens.

3. Bague de serrage selon la revendication 1 ou 2, **caractérisée en ce que** les pattes de fixation (2) de la chemise (1) et les pattes de stabilisation (3) de la couche (9) de la matière plastique intumescente sont attachées sur les bords (6) de la chemise (1), dans les zones entre les séries d'orifices (4).

4. Bague de serrage selon la revendication 1 ou 3, **caractérisée en ce que** les orifices (7) dans les pattes de fixation (2) de la chemise (1) constituent les orifices longitudinaux.

5. Bague de serrage selon la revendication 4, **caractérisée en ce que** les axes plus longues de symétrie (8) des orifices (7) dans les pattes de fixation (2) de la chemise (1) sont orientés perpendiculairement à la surface de cette chemise (1).

6. Bague de serrage selon une des revendications de 1 à 5, **caractérisée en ce que** les zones des attaches des pattes de fixation (2) et des pattes de stabilisation (3) avec la chemise (1) de la bague de serrage contiennent les affaiblissements extrêmes sous forme d'enfoncements (10) sur les bords longitudinaux (6) de cette chemise (1).
